# NEW EUROPEAN PATENT SPECIFICATION

(11) **EP 0 505 913 B2**
(45) Date of publication and mention of the opposition decision: **07.11.2001**
(45) Mention of the grant of the patent: 22.10.1997
(21) Application number: 92104688.4
(22) Date of filing: 18.03.1992
(51) Int. Cl.: H04M 11/02, H04M 1/02

(54) **System for assembling an external calling unit for an audio and/or video intercom for buildings.**
System für den Zusammenbau einer externen Rufeinheit für eine Audio und/oder Video-Gebäudegegensprechanlage
Système d'assemblage du module d'appel externe pour un interphone audiovisuel pour immeubles.

(30) Priority: 19.03.1991 IT TO910196; 24.05.1991 IT TO910386
(43) Date of publication of application: 30.09.1992
(73) Proprietor: Bitron Video S.r.l., 10044 Pianezza (TO) (IT)
(72) Inventor: Beduglio, Angelo, I-10143 Torino (IT); Cianficconi, Cesare, I-10098 Cascine Vica Rivoli (TO) (IT)
(74) Representative: Dini, Roberto, Dr. Ing.

(56) References cited:
- EP-A- 0 369 403
- DE-A- 3 518 109
- DE-U- 9 005 176
- FR-A- 2 302 648
- FR-A- 2 379 868
- GB-A- 2 239 581
- US-A- 4 843 461
- PATENT ABSTRACTS OF JAPAN vol. 10, no. 95 (E-395)12 April 1986 & JP-A-60 236 593
- PATENT ABSTRACTS OF JAPAN vol. 12, no. 184 (E-614)28 May 1988 & JP-A-62 289 084

## Description

The present invention relates to a system for assembling an external calling unit for an audio and/or video intercom for buildings, and to a modular box thereof.

It is known that the installation of intercoms and/or video intercoms supposes the realisation of appropriate systems and that, typically, for an effective operating of the external calling unit and of the internal surveillance unit or units, it is necessary that a certain number of elements are provided for:
- the external box, for housing and fixing the external unit, i.e. the element of the system that comprises the calling button or buttons;
- the internal box or boxes, for fixing the internal surveillance and reply units, inside the various rooms provided with the intercom system;
- the conduit, for passing the electric wires, that pass from the external box to the internal box;
- the electrical conductors, of inter-connection and power that, through the conduit, pass from the external unit to those internal and are then connected to the various units.

The cited components and the relative operating of which must always be considered, independently from the choice of intercom system or video intercom system: taking aside the assumed simplicity, the problems for installing such systems are multiple.

For example the boxes are rarely standardised, as, according to the type of use of the intercom system (individual system or party system), the installer may have to fit external units with only one or a few call buttons (for example in the case of a building housing two families), or external units with numerous analogous buttons (for example in the case of a high-rise).

Substantially similar problems are due to the differences between intercom systems and video intercom systems, as in the second case the need arises for boxes, plaques and chassis being different from the first, necessary for mounting the external telecamera, instead of the microphone and audio speaker.

It is clear that, even understanding the productive needs, those of the installers and of the final user, the producers of intercom systems try to standardise their production; therefore, at least for party systems, normally boxes of several standard dimensions and covers or plates, with corresponding dimensions and with a varied number of apertures for the calling buttons are provided.

For improving the standardisation and however providing a guarantee of flexible installation possibilities, several producers, have proposed modular push button boards; in this way, through appropriate chassis' and equal plaques, it becomes possible to make a plate that allows for the insertion of a varied number of buttons, without prejudicing the aesthetics of the external intercom unit (note for example Italian patent N° 1.223.916).

In spite of such types of solutions, the fact remains that intercom and electrical material producers normally provide different boxes being of several standard dimensions, the result of which being the installer being forced to have a stock of different boxes, and in the majority of cases has to install a box of greater dimensions than that actually called for.

For example, FR-A-2.379.868 describes an intercom external unit, wherein a plurality of different and autonomous boxes is provided, which are arranged side by side. Said boxes, which are not obtained by means of modular elements, are different in sizes, depending upon the components of the intercom system they have to contain (audio or video components).

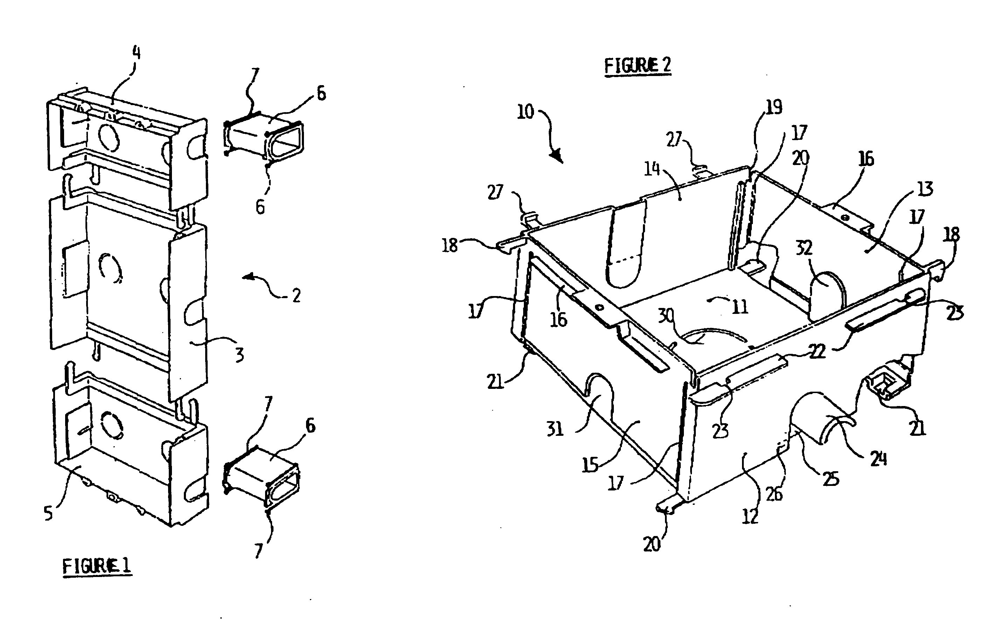

A possible solution to the problem regarding the flexibility of the boxes is contained in the European patent application N° 351.060, that proposes however other aims with respect the present invention. In such application, as illustrated in reference to figure 1 that follows, an external intercom unit is described, the box 2 of which shows the base module 3 to which a head 4 and a base 5 are engaged; in such a way it is possible to develop in the vertical sense the dimensions of the box and therefore, for obtaining structures of greater dimensions respect the base module 3, it is sufficient to engage two or more base modules 3, upon the extremities of which a head 4 and a base 5 will have to be engaged. In the same application the possibility of providing for the realisation of modular unit even in the horizontal sense, in as much that the modular bases 3 can be placed side by side, fixed and connected between themselves by means of autonomous tubular connectors 6. Such connectors 6, through means of couplers 7, assure the fixing between two or more adjacent modules, also allowing for the passing of electrical wires from one module to another.

The cited application, even though it indirectly acknowledges the modular box problem, it does not suggest a particularly flexible and standardised solution.

In fact, with the cited solution, each singular box results in being composed of at least three engaging elements (3, 4, 5), two of which (3, 4) being completely different between themselves both structurally and in their dimensions.

Moreover, in a case where a vertical increase of the box is desired, the number of components increases even more, as "n" of modules 3 must be added.

An analogous problem occurs in the case of a horizontal development, as for fixing 2 adjacent modules the need of at least eight pieces comes into being (the two base modules 3, two heads 4, to bases 5 and at least two tubular connectors 6); for each additional module to be added at least another five pieces are necessary (the base module, a head, a base and at least two tubular connectors).

The tubular connectors 6, apart from carrying out their function of fixing and holding in position, they suppose the presence of appropriate couplers 7, that complicate the realisation of such connectors 6.

It is therefore clear that the deduced solution in the European patent application N° 351.060 does however present inconveniences be it for the producer and for the installer: the first will have add to his base schedules, produce and store many different pieces that regard a similar product, and the second, apart from having to store and buy the same different pieces, he will have to pay particular attention in assuring he has all the various components of the box and above all the tubular connectors. From DE-C-27 11 324 a box is also know for an external calling unit of an audio and/or video intercom, having the features of the preamble of annexed claim 1 and 26.

According to this solution, connecting elements are provided in an intermediate position of the lateral walls of a base structure; in this way a first base structure can be coupled to a second base structure, by mutually engaging respective connecting elements. This solution however implies certain drawbacks as to installment flexibility and easiness; for instance, the entry of the necessary wiring into the coupled base structures can be obtained only through their bottom walls, which are provided with proper passages to this purpose.

The present invention is based on the knowledge of these facts and its aim is therefore that of indicating a system of audio and/or video intercom equipment that, although guaranteeing an elevated standardisation, at a productive level, allows for reaching a remarkable installment flexibility, and that it is extremely easy to install and of low costs.

Such aims are reached according to the present invention by a system for the assembly of an external calling unit for an audio and/or video intercom for buildings, and to a modular box thereof.

Further aims and advantages of the present invention will become clear from the following description, and annexed drawings supplied as a non-limiting example, wherein:
- figure 1 represents a box for external intercom units object of the European patent application N° 351.060, as previously described;
- figure 2 represents a partial sectioned view of a modular box of the system object of the present invention;
- figure 3 represents a partial sectioned view of three modular boxes of the system object of the present invention, that illustrates a way in which by using three of such boxes a structure being of superior dimensions to the base module can be obtained;
- figure 4 schematically represents a first external intercom unit, that can be inserted within the box of figure 2;
- figure 5 schematically represents a first external video intercom unit, that can be inserted within the box of figure 2; figure 6 schematically represents a second external intercom unit, that can be inserted within the box of figure 2;
- figure 7 schematically represents a second external video intercom unit, that can be inserted within the box of figure 2;
- figure 8 represents a sectioned horizontal view of the external video intercom unit of figure 5;
- figure 9 represents a sectioned vertical view of the external video intercom unit of figure 5.

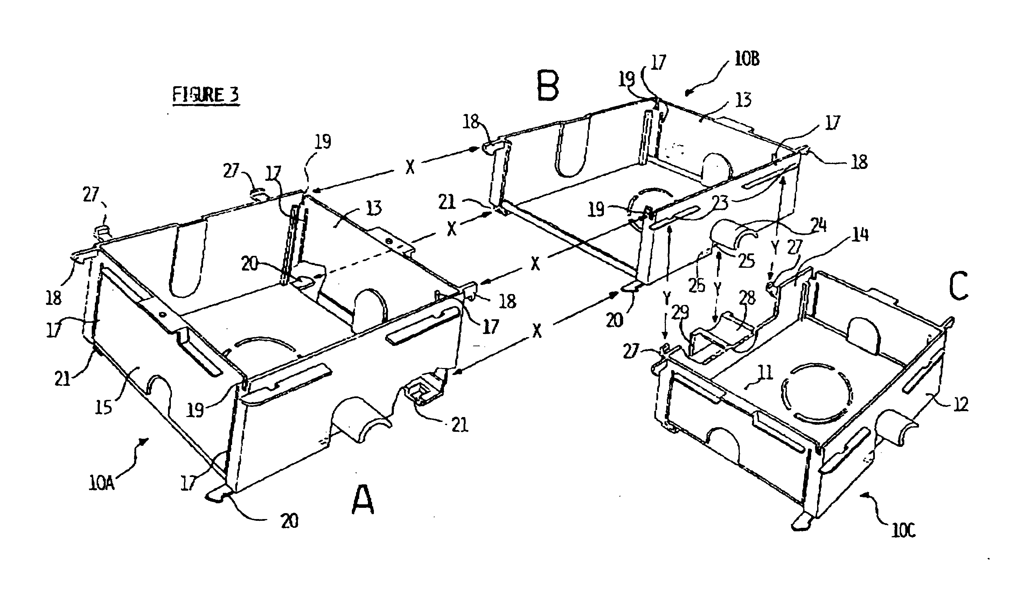

With particular reference to figure 2, the reference number 10 indicates as a whole a combinable modular box of the system object of the present invention; constituted by a base 11 and four lateral walls 12, 13, 14 and 15, united between themselves and obtained from a single piece.

The walls 13 and 15 have brackets 16 with hole for fixing to an external calling and/or filming unit, described later; each of said walls 13 and 15 also have two reductions of thickness or slits 17; such slits cross walls 13 and 15 along almost all of their longitudinal length and are realised in proximity of the corners that said walls (13 and 15) form with walls 12 and 14.

Each of the walls 13 and 15 then has, in correspondence with one of such corners, an engaging hook 18 and, in correspondence of the other comer, an open slot 19; in particular, the engaging hooks, that are united to the box, and the open slots 19, are realised on the superior sections of the walls 13 and 15, in the area between the slits 17 and the corners of the box.

The box, as before regarding the walls 13 and 15, has a second set of engaging hooks 20 and seats 21. Such second set of hooks and seats are realised between the slit 17 and the corners, but are positioned on the inferior section of the box and are therefore united to its base 11.

The wall 12 however presents two brackets 22 with further seats 23 for further engaging elements, as will be explained later.

The same wall 12 also has a semi-tubular joining means 24, united to the said wall and substantially placed as to its centre, being of the form of an up-turned U.

On the same wall, under the joining means 24, an aperture 25 is realised, apt of housing a U shaped semi-tubular conduit, furthermore, on the base 11 of the box in actual correspondence to said aperture 25, a slot 26 is realised.

The wall 14 however has further engaging hooks 27, positioned in the same points in which, on wall 12, the seats 23 are to be found.

Moreover, such wall 14 in its centre has a semi-tubular joining means 28, visible from section C of figure 3, similar to that previously mentioned and being of analogous dimension; in this case, however, the joining means is U shaped and has a portion 29, the form of which allows for it to be slid from below into the slot 26.

As can be seen, therefore, all the elements that constitute the modular box of the system according to the present invention are united between themselves and are obtained from a single moulded piece, for instance in plastic.

The parts protruding from the body of the box 10, i. e. the engaging elements 18, 20, 22, 27 etc., are effective in increasing stability of the box, once fix and cemented to a wall, and the joining means 24 and 28 are particularly useful in allowing the introduction of the lateral tubes, through which the electric cable passes.

All the parts protruding from the body of the box, however, being of plastic and in reduced sections, can easily be removed, by hand or with pinchers or scissors, whenever the necessity arises.

It is also to be taken into consideration that the walls and the base of the box 10 can provide further apertures (30, 31, 32) closed with the use of normal membranes of the same material of which the box is realised, easily removable, and that the apertures of the joining means 24 and 28 are also normally closed in such a way.

With reference to figure 3 a method will now be illustrated in which, by means of the described box, a combination can be realised be it in the vertical sense or in the horizontal sense, and complex structures can be obtained through uniting a number of boxes 10, without the use of additional pieces.

For realising the combination in the vertical sense it is sufficient to remove several elements of the two boxes intended to be united, as partially illustrated in part A and B of figure 3.

In this case, for uniting boxes 10A and 10B it would be sufficient to remove a wall of each box, i.e. the wall 13 of box 10A and wall 15 of box 10B (in the illustrated case of figure 3 only wall 15 of box 10B has been removed). After having eliminated said two walls, the boxes will then be fixed between themselves in a very simple manner, in the sense indicated with the arrows X, through engaging the hooks 18 and 20 of each box in seats 19 and 21 of the other box; in particular the hooks 18 are slid into slots 19 and the hooks 20 are slid into seats 21.

Consequently, there are four connecting elements between the two boxes 10A and 10B, suitable for guaranteeing the required seal for effecting the operation of wall embedding.

It is to be noted that removing the walls 13 and 15 can easily be carried out, due to the presence of the slits 17, and can be manually carried out.

The method for realising a combination in the horizontal sense is illustrated with reference to parts B and C of figure 3.

In this case it is not necessary to remove any element, as the assembly of the two boxes 10B and 10C is realised in the sense indicated by the arrows Y.

In particular, box 10B will be united to box 10C in such a way that the hooks 27 fit into place in seats 23; with the same operation the conduit 28 will enter in the aperture 25 and the portion 29 will slide into the slot 26.

Moreover, due to such arrangement, the conduits 24 and 28, apart from acting as fixing elements between the boxes 10B and 10C, they determine a passage for the electric cables from one box to the next.

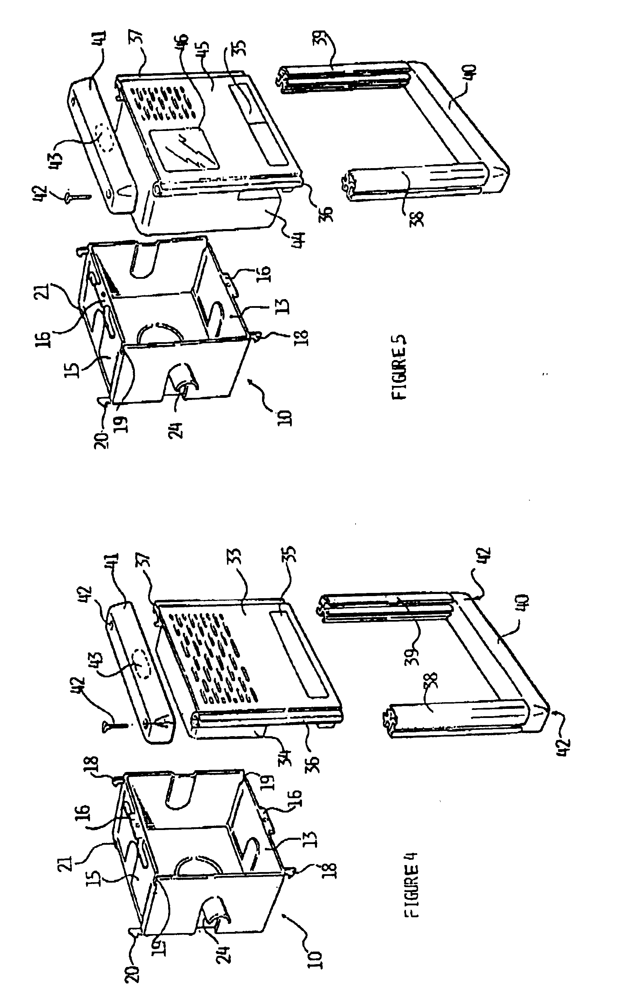

With reference to figure 4, that schematically represents a first external intercom unit, that can be inserted within the box of figure 2, the reference number 10 indicates the combinable modular box, being of contained dimensions (for example, its internal dimensions could be 11.2 x 10.8 x 5.4 cm); the reference number 33 indicates a plaque upon which a calling module is fixed, realised with substantially known techniques, comprising a speaker, microphone and circuitry, and the relative calling button 35, the plaque 33 has guides 36 and 37 along its lateral edges.

Number 38 and 39 indicate two corner mounts of complex profiles, apt to be slid in the guides 36 and 37 while, with number 40 and 41, a base and a head are respectively represented that, by means of screws 42 become fixed to the corner mounts 38 and 39.

The brackets 16 of the box 10 are utilised for fixing the external unit as a whole, from the moment it is inserted into the box; in particular, after having assembled, between themselves, the pieces 33-41 and having carried out the necessary connections, the base 40, has a hinged element of plastic material (visible in figure 9, with the reference number 50), is fixed by means of a screw to the inferior bracket 16: the combination 33-41 therefore results in being hinged below and with a simple semi-rotational move it is inserted into box 10. At this point the head 41 is fixed with a second screw to the superior bracket 16, through an opening 43, that is closed after screwing.

It is to be noted that the external unit illustrated in the figure, that apparently is of a single call version, i.e. with only one calling button, can very easily be transformed into a double calling unit (for instance for a Building housing two families), due to its particular realisation, that will described later.

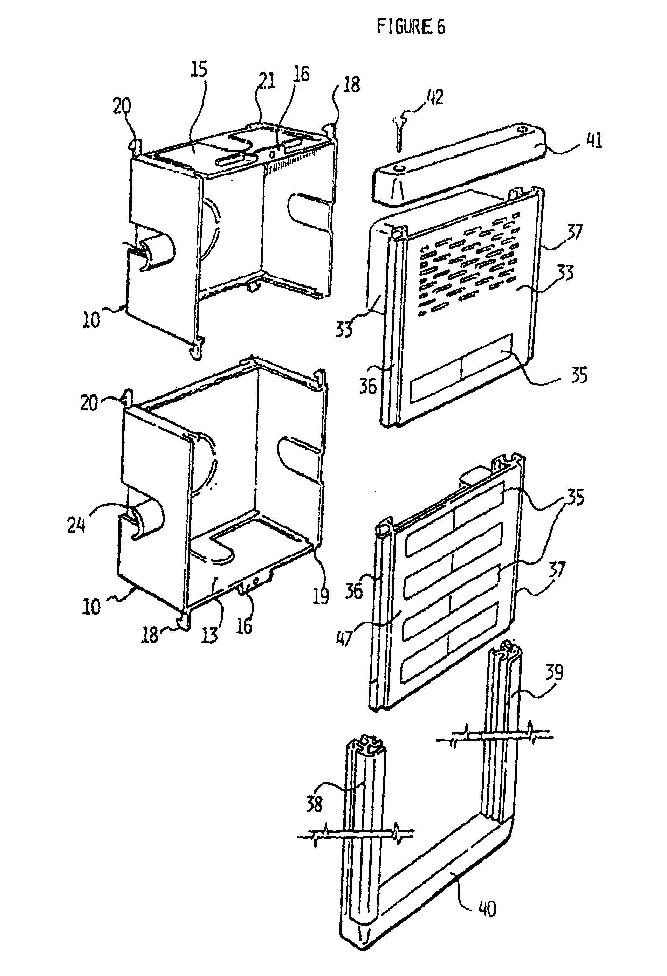

In figure 5 a schematic representation of a first external video intercom unit is illustrated, that can be inserted within the box of figure 2; the various components are indicated with the same reference numbers of the previous figure, with exception to numbers 44 and 45 that respectively indicate a modular call and film video intercom and the relative plaque, comprising the protective glass 46 for the telecamera inserted in the module 44.

As can be seen, the components utilised for installing external units illustrated in figures 4 and 5 are basically the same, independently form the fact that the system is only audio or audio and video; also the connective conduits, that for simplicity sake are not represented, are the same, as will be seen later.

The successive figure 6 schematically represents a second external intercom unit, that can be inserted within two assembled boxes, in the case wherein the intercom system is destined to be used in a building with numerous users.

As can be immediately seen, the majority of parts utilised are the same as the previous figures. In particular, combination in this case is obtained trough two modular boxes 10, that can be fix to each other by the hooking means 18-21 and eliminating some of the removable walls.

The head 41 and the base 40 are also the same, as is the plaque 33, the push buttons 35 and the comer mounts 38 and 39, cut longer than those indicated in figures 4 and 5.

Due to the greater number of users of the system, in this case, the external unit shall naturally have to be comprised of a larger number of calling buttons 35, that are however of the same type as those indicated in the previous figures, with this aim a plaque 47 will be provided for with various housing for the buttons.

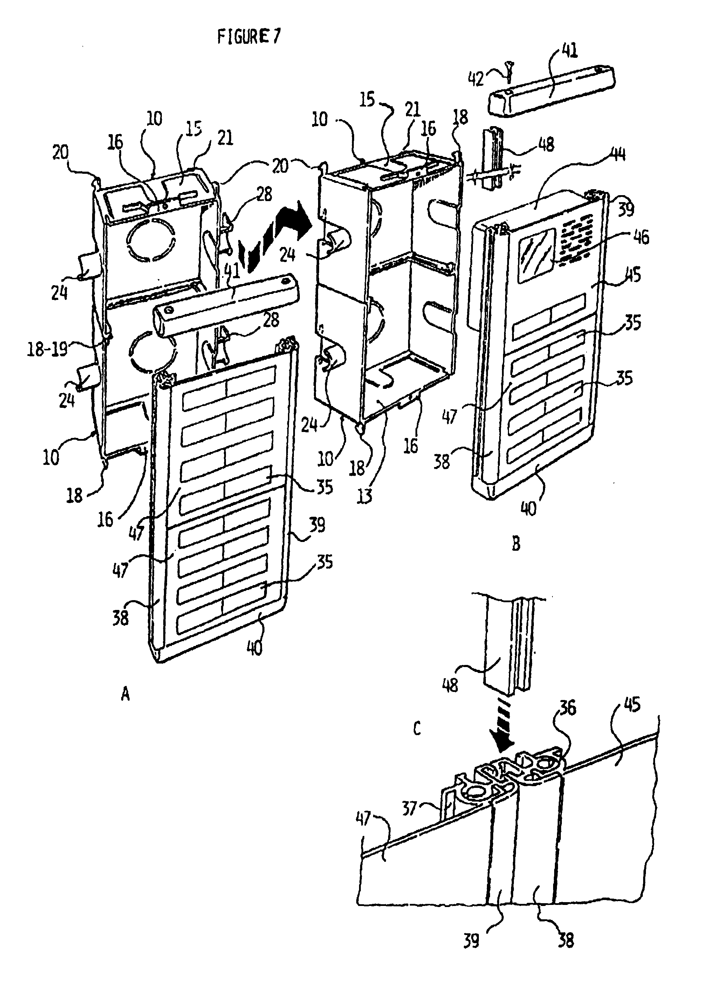

The successive figure 7 schematically represents a second external video intercom unit that can be inserted within four assembled boxes 10, in the case wherein the system is destined to be used in a building with numerous users, similarly to the case illustrated in figure 6.

The components utilised for this installation have in this case already been mentioned in the previous figures, for this reason it is easy to clearly comprehend the way in which a productive standardisation can be reached.

Figure 7, parts A and B, apart from clearly demonstrating how a vertical combination is obtained, also described in figure 6, also demonstrates the way in which a combination of the external unit can also be obtained in the lateral sense, independently from the type of system (intercom or video intercom) installed.

With regards the boxes, they will be laterally fixed to each other by means of the conduits 24 and 28, that apart from making the passage of the conduits from one box to the other possible, they also act as fixing means, due to their particular form.

The various plaques 45 and 47 (or 33 in figure 4) on which the push buttons 35 and the module 44 are placed (or 34 in figure 4) are fixed in the method already illustrated, that is by means of the guides 36 and 37 with the corner mounts 38 and 39, and the head 41 and the base 40 with the superior and inferior brackets.

The strength of the structure of the external unit is however increased by fixing between them profiled corner mounts 38 and 39 of two different plaques that, after a lateral "expansion" of the external unit, result in being adjacent.

Such a case is demonstrated in part C of figure 7, where the comer mounts 38 and 39 can be seen in detail, being identical, have a particular sectioned profile ; such profile allows for uniting two adjacent corner mounts, by simply sliding upwards or downwards, before fixing the head 41 or the base 40, a double T shaped connecting element 48.

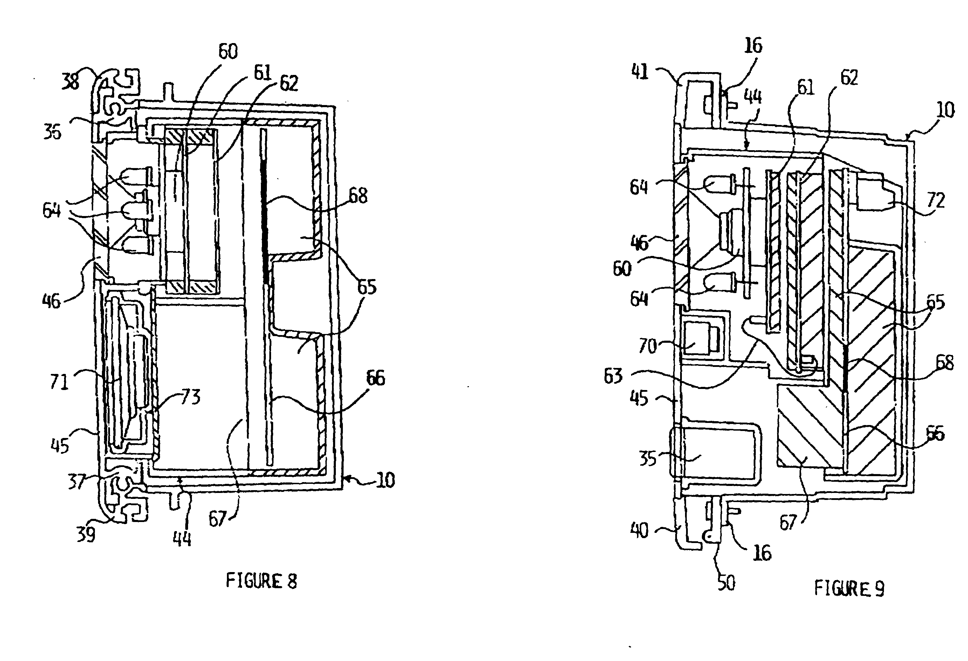

With reference to the successive figures 8 and 9, that represent horizontal and vertical sections respectively of the external video intercom of figure 5, a method will now be illustrated in which it is possible to obtain a call and film video intercom module being of dimensions that allow for installing be it an audio intercom or a video intercom by utilising the same box of reduced dimensions, so as that it is also possible to insert a video intercom where an audio intercom was present.

Such figures partially utilise the reference numbers of the previous figures, for which 10 indicates the combinable modular box; with 45 the plaque for the video intercom 44, comprising the guides 36 and 37 and the protective glass plate 46 of the telecamera; with 38 and 39 corner mounts of complex profiles are indicated; with 40 and 41 the base and the head are indicated (with the relative fixing screws for the brackets 16 and to the hinge element cited at the beginning, indicated with the number 50, that results in being useful for example during maintenance phases, when the necessity arises for opening the external unit, without having to completely remove the module); with 35 a calling button is then indicated, analogous to those of the previous figure and of the type described further on.

With 60 a black and white telecamera is indicated, with the optics being separated from the electronics (for example of the SPT-C3B type produced by Sony), realised with the CCD techniques (i.e. charged coupled device), that comprises two electronic circuits 61 and 62 realised with the SMD technique (i.e. in which the electronic circuitry is assembled using the technique in which the components are mounted on the surface of the printed circuit board); the two circuits 61 and 62 connected to each other by means of an appropriate conductor 63.

With 64 two series of LED infrared diodes are indicated, that produce the amount of light necessary for enabling the telecamera to film.

With 65 an electronic module is indicated, that concentrates all the normal control functions (cable connections, connections to the push buttons, to the microphone, to the speaker, etc.) and that also comprises a device that, due to a particular circuitry arrangement, allows for the functioning of a video intercom be it with a connection comprising a coaxial cable, or with a connection comprising cables of a non coaxial type; in the specific case such device is constituted by a compensation circuit that allows video frequency signals to be transmitted over a distance through normal multi-wired cables, as is clearly described in Italian patent application N°67203-A/89, in the name of the same applicant.

On the terminal board 66 of such module 65, various circuitry components are assembled; in particular, the components of greater dimensions (i.e. those that can not be realised using the SMD techniques) are positioned in the area 67 where, due to the particular arrangement of the other elements of the video intercom module 44, an available space is obtained (other components of medium dimensions can however be positioned to the left of the terminal board 66).

The darkened section of the terminal board 66, indicated with 68, is an area subject to restrictions: with reference to figures 8-9, the components are mounted on such section to the right, with SMD techniques. This provision allows for effectively solving the problem of setting the telecamera. In fact, according to the arrangement that will be given to the external unit, the telecamera shall have to be directed in the way for guaranteeing the best filming; the telecamera is mounted in module 44 so as that it can be inclined and for this reason in section 68 of the terminal board 66 there must not be any electrical components to the left (as always with reference to figures 8-9), that would be an encumbrance, not even the eventual rheophores of the components mounted to the right of the terminal board are to come into view.

Finally, with 70 the microphone of the external unit is indicated, with 71 its speaker is indicated, contained in an appropriate seat 73 that improves the characteristics of the sound reproduction, and with 72 the terminals for the connection of the input conductors and of the audio/video signals. From an examination of figures 8 and 9 it is understood how it is possible to realise an external video intercom unit of greatly reduced dimension, by means of the use of miniaturised circuitry techniques, of a telecamera of greatly reduced dimensions and arranging the various components in a particular way. In this way, therefore, an external video intercom unit of extremely reduced dimensions can be realised that allows for it to be inserted into the same box that can normally house only an external audio intercom unit.

The use of the device that allows for working the video intercom with either a connection comprising a coaxial cable, or with a connection comprising cables of a non coaxial type also allows for the utilisation of multi-wired conductors and therefore permits for substituting the first type of system for the second.

With regards the calling buttons 35, they are realised with substantially known techniques, according to which the depressing of a transparent button (that acts as a cover and, for example, supports the name plate) corresponding to the activation of an electrical contact. The buttons 35 do have however the peculiarity of having two contacts and a long key (that each separately intervene on one contact only). Therefore the mentioned button can call one or two internal units:
- in the first case, upon installation, the internal unit will be connected to button 35 through only one of the two contacts (or will be connected to both parallel contacts) and the button shall be supplied with a long key;
- in the second case, two different internal units will be connected each to one of the two contacts and the button shall be supplied with two short keys, of the type visible in figure 5.

Such perception is obviously greatly useful in the case where it is necessary to add of eliminate calling buttons.

To exemplify the advantages deriving from the use of buttons as the type described (and to further exemplify the advantages of the present invention) we may imagine for example an external intercom unit of figure 4 and suppose that it has been installed in a one family building. And also suppose that such building, after having been modernised, is converted into two separate apartments and we can also imagine that the inhabitants of which decide to substitute the audio intercom system with a video intercom system.

According to known techniques, all the components of the original external unit would have to be removed (including the embedded box) and substituted with other components (calling for bricklaying interventions); even the normal conductors would have to be substituted with coaxial cables.

With the utilisation of the system according to the present invention, however, the intervention on the external unit would be reduced to a minimum.

It would only be necessary to remove the module 34 and the relative plaque 33 of figure 4 with the module 44 and the relative plaque 45 of figure 5, and substitute the long key of the button 35 with two short keys. Such substitutions are extremely easy to carry out: it would be sufficient to remove the cover 43, unscrew the fixing screws of the superior bracket 16 and open as a hatch. After having removed the head 41, the various components can be substituted and carry out the necessary connections, after which the external unit can be closed inverting the previous operations.

In the described case, that constitutes an "expanded" transformation of the system, the connecting conductors for the apartment not connected to the previous system will naturally have to be added; it is however clear that in the case of only transforming the system, if the apartments had been always been two, the addition of new conductors would not be necessary.

From the present description the characteristics of the system of audio and/or video intercom equipment for buildings object of the present invention become clear, from the present description its advantages also result in being clear. In particular they are represented by the fact that:
- a complete productive standardisation of the box corresponds to a considerable flexibility of installation;
- the box and the various components of which it is comprised constitute a single piece, without the necessity of additional element; its installation is very easy and its costs are very limited with regards the known solutions;
- the box can be used singularly, but at the same time can also constitute the module of a structure being of greater dimension, obtainable by assembling numerous boxes together either and expandable in either a vertical sense, or in a horizontal sense;
- the use of the described external video intercom unit allows for obtaining an almost absolute standardisation, with the relative advantages for producers, sales outlets and installers; all the various parts of the external unit to be utilised for the installation are in fact the same (obviously with the exception the calling modules and the relative plaques) either for an external audio unit, or an external audio-video unit;
- the installation of the external unit is extremely simplified, be it with regard the box to be embedded, or be it with regard the components in view; it maintenance is also very simple, as in the case where it is necessary to have internal access of the box, it is sufficient to unscrew the fixing screws of the superior bracket and, due to the hinge element, open the external unit as if it were a hatch;
- the presence, inside the audio/video module, of the compensation circuit, that allows for the video frequency signals to be transmitted over a distance through normal multi-wired cables, allows for the installation of a video intercom system where a previous audio intercom system was with the simple substitution, regarding the external unit, of the call module and of the relative plaque; such compensation circuit does not naturally prejudice in any way whatsoever the possibility of using coaxial cables;
- the presence of transformable buttons with extreme ease from single buttons to double buttons, offers the possibility of having, on an external unit of greatly reduced dimensions, a great number of calling keys than those of the known intercoms or video intercoms; in this way internal units can freely be added at a later date to those initially provided.

It results that the present invention allows for the choice of installing, indifferently, an audio intercom system or a video intercom system even after having assembled the box, tubes and the input and connecting cables, without any modifications being necessary to the components already installed; it therefore allows to substitute a normal audio system with a video system or vice versa, without any modifications to the mentioned components.

## Claims

1. System for the assembly of an external calling unit for an audio and/or video intercom for buildings, said external calling unit comprising
- a box,
- an intercom module (34,44) to be housed within said box (10),
- at least a cover (33,45,47) for said box,
- at least a call button (35),
wherein said box for said external unit is realised starting from of one or more modular base structures (10) which are all equal between themselves, wherein engaging means (18-29) are provided, integral with said base structure (10), for its eventual coupling with another base structure (10), in order to obtain the expandability of said box, and wherein, whichever the dimensions of the external calling unit to be assembled are, the relevant box is obtained through one or more of said base structures (10) coupled to each other, **characterized in that,** in order to obtain an expandibility of said box, at least a wall (13,15) of each of two base structures (10) to be coupled is removable.

2. System, according to claim 1, **characterised in that** said box is vertically expandable, by coupling two base structures (10) one above the other.

3. System, according to at least one of the previous claims, **characterised in that** said box is horizontally expandable, by coupling two base structures (10) side by side.

4. System, according to claim 1, **characterised in that** said cover is obtained through one or more cover plaques (33,45,47), the dimensions of a cover plaque (33,45,47) substantially corresponding to the area which is defined by four walls (12-15) of said base structure (10).

5. System, according to claim 4, **characterised in that** said cover plaque (33,45,47) has shaped lateral edges (36,37) which are inserted within angular elements (38,39) of complex profiles.

6. System, according to the previous claim, **characterised in that** an upper head (41) and a lower terminal (40) are fixed at the ends of said angular elements (38,39), which are in turn fixed to support means (16) being integral with said base structure (10).

7. System, according to claims 2 and 5, **characterised in that**, in case of vertical expansion of said box, a plurality of said cover plaques (33,45,47) is assembled one above the other by means of said angular elements (38,39), the length of which substantially corresponds to the vertical dimension of the box being obtained through the vertical coupling of a plurality of said base structures (10).

8. System, according to claim 5, **characterised in that** a profiled element (48) is provided, in particular having a double T section, apt at being inserted within a portion of said angular elements (38,39).

9. System, according to claims 3 and 8, **characterised in that**, in case of horizontal expansion of said box, said profiled element (48) is used for coupling two angular elements (38,39) side by side, for the mutual fixing of two cover plaques (45,47) of two flanked base structures (10).

10. System, according to one or more of the previous claims, **characterised in that** different cover plaques (33,45,47) are provided for supporting:
- an audio-only intercom module (34), or
- an audio/video intercom module (44), or
- one or more call buttons (35).

11. System, according to at least one of the previous claims, **characterised in that** said call button (35) is associated to a plurality of electrical contacts, which can be simultaneously or separately activated.

12. System according to at least one of the previous claims, **characterised in that** either
- an audio-only intercom module (34), comprising at least a speaker, a microphone and electric circuitry, or
- an audio/video intercom module (44), comprising at least a telecamera (60), a speaker (71), a microphone (70) and electric circuitry (61-63, 65-68),
is provided for being housed within said base structure (10), so as that an audio-only intercom module (34) can be replaced by an audio/video intercom module (44) without the necessity of having to change or modify said box (10).

13. System, according to claim 10 or 12, **characterised in that** said audio/video intercom module (44) comprises:
- a directional telecamera (60);
- means (64) for illuminating the subject being filmed by said telecamera (60), in particular infrared LEDs,
- a speaker (71),
- a small dimensioned microphone (70),
- at least one call button (35),
- printed circuits (61,62,65,66,67,68), for supporting said electric circuitry.

14. System, according to the previous claim, **characterised in that** said electric circuitry is mounted on a plurality of printed circuit boards, at least a portion of which has dimensional bindings.

15. System, according to at least one of the previous claims, **characterised in that** said audio/video intercom module (44) comprises a compensation circuit, that allows for video frequency signals to be transmitted through normal multi-wired cables, so as that an audio-only intercom module (34) can be replaced within one of said base structures by an audio/video intercom module (44) without the necessity of having to change the electrical connections that connect the external unit to the relevant internal surveillance units.

16. System, according to claim 1, **characterised in** means (17) are provided for facilitating the removal of said wall (13,15).

17. System, according to the previous claim, **characterised in that** said means (17) for facilitating said removal are constituted by slits (17) or thickness reductions of the walls (13,15) in a vertical and/or horizontal sense.

18. System, according to claim 1, **characterised in that** said engaging means (18-29) comprise hooks (18,20,27,29) and seats (19,21,23,26) integral with the walls (12-15) and/or the bottom (11) of said base structure (10).

19. System, according to claim 1, **characterised in that** said base structure (10) comprises passage means (24,26,28-29) apt at realising the mutual coupling of two of said base structures (10), said passage means (24,26,28-29) constituting in particular also a mouth for the tubes through which electric connection cables reach said box.

20. System, according to the previous claim, **characterised in that** said passage means (24-26,28-29) comprise at least one aperture (25) and a conduit (24,28) realised on at least one of the walls (12-15) of said base structure (10), externally extending from the same.

21. System, according to the previous claim, **characterised in that** said passage means (24-26,28-29) are constituted by a first conduit (24) situated on a wall (12) of said base structure (10) and a second conduit (28) situated on the opposite wall (14) and by an aperture placed in correspondence of said conduits, in particular the first conduit (24) of a base structure (10B) and the second conduit (28) of another base structure (10C) being apt to mutually engage.

22. System, according to claims 2 and 18, **characterised in that** the vertical expandability of said box is obtained by removing at least one wall (13,15) of each of two base structures (10) and coupling some of the hooks (18,20) and the seats (19,21) being integral with the remaining parts of the two base structures (10) that are to be united.

23. System, according to claim 3 and 19, **characterised in that** the horizontal expandability of said box is obtained by engaging said first and second conduits (24-26,28,29) of the two different base structures (10) that are to be united.

24. System, according to at least one of the previous claims, **characterised in that** said base structure (10) is constituted by a single piece, in particular of a plastic material, obtained through a moulding operation.

25. System, according to claim 6, **characterised in that** said lower terminal (40) comprises a hinge element (50) that allows for tilting said plaque (45) or plurality of plaques, with the relevant angular elements (38,39), with respect the box (10).

26. Modular box for an external calling unit of an audio and/or video intercom, of the type provided for housing electric components (34,35,44) of said intercom, wherein a cover (33,45,47) is destined to be fixed onto said box, wherein said box is realised starting from of one or more modular base structures (10) which are all equal between themselves, and wherein engaging means (18-29) are provided, integral with said base structure (10), for its eventual coupling with another base structure (10), whereby, depending upon the dimensions of the box to be obtained are, the same is obtained through one of said base structures (10) or a plurality of said base structures (10) coupled to each other, **characterized in that** in order to obtain an expandibility of said box, at least a wall (13,15) of each of two base structures (10) to be coupled is removable.

## Patentansprüche

1. System für den Zusammenbau einer externen Rufeinheit für eine Audio- und/oder Video-Gegensprechanlage für Gebäude, mit
- einer Box für die externe Rufeinheit,
- einem Gegensprechmodul (34, 44), welches in der Box (10) unterzubringen ist,
- mindestens einer Abdeckung (33, 45, 47) für die Box,
- mindestens einem Rufknopf (35),
wobei die Box für die externe Rufeinheit beginnend mit einer oder mehreren modularen Basistrukturen (10), welche untereinander alle gleich sind, realisiert wird, wobei Eingriffsmittel (18-29) vorgesehen sind, integral mit der Basistruktur (10), um sie möglicherweise mit einer anderen Basisstruktur (10) zu verbinden, um eine Verlängerbarkeit der Box zu erhalten, und wobei unabhängig von den Abmessungen der zusammenzubauenden externen Rufeinheit die entsprechende Box durch eine oder mehrere miteinander gekoppelte Basisstrukturen (10) erhalten wird, **dadurch gekennzeichnet, daß** zur Erreichung einer Verlängerbarkeit der Box zumindest eine Wand (13, 15) jeder der zwei zu verbindenden Basisstrukturen (10) entfernbar ausgestaltet ist.

2. System nach Anspruch 1,
**dadurch gekennzeichnet, daß** die Box vertikal verlängerbar ist, durch Koppeln zweier Basisstrukturen (10), eine über der anderen.

3. System nach mindestens einem der vorstehenden Ansprüche,
**dadurch gekennzeichnet, daß** die Box horizontal verlängerbar ist, durch Kopplung zweier Basisstrukturen (10), Seite an Seite.

4. System nach Anspruch 1,
**dadurch gekennzeichnet, daß** die Abdeckung durch eine oder mehrere Abdeckschmuckplatten (33, 45, 47) erhalten wird, wobei die Abmessungen einer Abdeckschmuckplatte (33, 45, 47) im wesentlichen der Fläche entsprechen, die durch vier Wände (12-15) der Basisstruktur (10) definiert wird.

5. System nach Anspruch 4,
**dadurch gekennzeichnet, daß** die Abdeckschmuckplatte (33, 45, 47) geformte laterale Kanten (36, 37) aufweist, welche in winkelige Elemente (38, 39) mit komplexen Profilen eingesetzt werden.

6. System nach einem der vorstehenden Ansprüche,
**dadurch gekennzeichnet, daß** ein oberes Kopfteil (41) und ein unteres Endteil (40) an den Enden der winkeligen Elemente (38, 39) angebracht sind, welche wiederum an Trägermitteln (16) angebracht sind, welche mit der Basisstruktur (10) eine Einheit bilden.

7. System nach den Ansprüchen 2 und 5,
**dadurch gekennzeichnet, daß** im Falle der vertikalen Verlängerung der Box eine Vielzahl der Abdeckschmuckplatten (33, 45, 47) übereinander mit Hilfe der winkeligen Elemente (38, 39), deren Länge im wesentlichen der vertikalen Abmessung der Box entspricht, die durch die vertikale Kopplung einer Vielzahl der Basisstrukturen (10) erhalten wird, zusammengebaut werden.

8. System nach Anspruch 5,
**dadurch gekennzeichnet, daß** ein mit einem Profil versehenes Element (48) vorgesehen ist, insbesondere mit einem Doppel-T-Abschnitt, welcher angepaßt ist, um in einen Abschnitt der winkeligen Elemente (38, 39) eingesetzt zu werden.

9. System nach den Ansprüchen 3 und 8,
**dadurch gekennzeichnet, daß** im Falle einer horizontalen Verlängerung der Box das mit einem Profil versehene Element (48) zur Kopplung zweier winkeliger Elemente (38, 39) Seite an Seite verwendet wird, zur gegenseitigen Fixierung zweier Abdeckschmuckplatten (45, 47) zweier abgeschlossener Basisstrukturen (10).

10. System nach einem der vorstehenden Ansprüche,
**dadurch gekennzeichnet, daß** verschiedene Abdeckschmuckplatten (33, 45, 47) vorgesehen sind zur Unterstützung:
- eines Nur-Audio-Gegensprechmoduls (34), oder
- eines Audio/Video-Gegensprechmoduls (44), oder
- eines oder mehrerer Rufknöpfe (35).

11. System nach einem der vorstehenden Ansprüche,
**dadurch gekennzeichnet, daß** der Rufknopf (35) mit einer Vielzahl von elektrischen Kontakten verbunden ist, welche gleichzeitig oder getrennt aktiviert werden können.

12. System nach einem der vorstehenden Ansprüche,
**dadurch gekennzeichnet, daß** entweder
- ein Nur-Audio-Gegensprechmodul (34) mit mindestens einem Lautsprecher, einem Mikrophon und elektrischen Schaltungen, oder
- ein Audio/Video-Gegensprechmodul (44) mit mindestens einer Fernsehkamera (60), einem Lautsprecher (71), einem Mikrophon (70) und elektrischen Schaltungen (61-63, 65-68),
vorgesehen ist, um innerhalb der Basisstruktur (10) untergebracht zu werden, so daß ein Nur-Audio-Gegensprechmodul (34) durch ein Audio/Video-Gegensprechmodul (44) ersetzt werden kann, ohne daß es notwendig ist, die Box (10) auszuwechseln oder zu verändern.

13. System nach einem der Ansprüche 10 oder 12,
**dadurch gekennzeichnet, daß** das Audio/Video-Gegensprechmodul (44) enthält:
- eine gerichtete Fernsehkamera (60);
- Mittel (64) zum Beleuchten des mittels der Fernsehkamera (60) zu filmenden Objektes, insbesondere Infrarot-LEDs,
- einen Lautsprecher (71),
- ein kleines Mikrophon (70),
- mindestens einen Rufknopf (35),
- gedruckte Schaltkreise (61, 62, 65, 66, 67, 68) als Träger der elektrischen Schaltungen.

14. System nach dem vorstehenden Anspruch,
**dadurch gekennzeichnet, daß** die elektrischen Schaltungen auf einer Vielzahl von gedruckten Schaltplatten montiert sind, von denen mindestens ein Abschnitt abmessungsgerechte Bindungen aufweist.

15. System nach mindestens einem der vorstehenden Ansprüche,
**dadurch gekennzeichnet, daß** das Audio/Video-Gegensprechmodul (44) einen Ausgleichsschaltkreis enthält, der es Videofrequenzsignalen erlaubt, durch normale mehrdrahtige Kabel übertragen zu werden, so daß ein Nur-Audio-Gegensprechmodul (34) innerhalb einer der Basisstrukturen durch einAudio/Video-Gegensprechmodul (44) ersetzt werden kann, ohne daß es notwendig ist, die elektrischen Verbindungen, die die externe Einheit mitden entsprechenden internen Überwachungseinheiten verbinden auszutauschen.

16. System nach Anspruch 1,
**dadurch gekennzeichnet, daß** Mittel (17) vorgesehen sind, die das Entfernen der Wand (13, 15) vereinfachen.

17. System nach dem vorstehenden Anspruch,
**dadurch gekennzeichnet, daß** die Mittel (17) zur Vereinfachung des Entfernens durch Schlitze (17) oder Verminderungen der Dicke der Wände (13, 15) in vertikaler und/oder horizontaler Richtung gebildet sind.

18. System nach Anspruch 1,
**dadurch gekennzeichnet, daß** die Eingriffsmittel (18-29) Haken (18, 20, 27, 29) und Sitze (19, 21, 23, 26) enthalten, die integral mit den Wänden (12-15) und/oder dem Boden (11) der Basisstruktur (10) gebildet sind.

19. System nach Anspruch 1,
**dadurch gekennzeichnet, daß** die Basisstruktur (10) Durchgangsmittel (24, 26, 28-29) aufweist, die angepaßt sind, um die gegenseitige Kopplung zweier der Basisstrukturen (10) zu realisieren, wobei die Durchgangsmittel (24, 26, 28-29) insbesondere auch eine Öffnung für die Röhren bilden, durch die elektrische Verbindungskabel die Box erreichen.

20. System nach dem vorstehenden Anspruch,
**dadurch gekennzeichnet, daß** die Durchgangsmittel (24-26, 28-29) mindestens eine Öffnung (25) und einen Kanal (24, 28), welcher auf mindestens einer der Wände (12-15) der Basisstruktur (10) sich nach außen von denselben erstreckend gebildet ist, enthalten.

21. System nach dem vorstehenden Anspruch,
**dadurch gekennzeichnet, daß** die Durchgangsmittel (24-26, 28-29) durch einen ersten Kanal (24) gebildet sind, welcher sich auf einer Wand (12) der Basisstruktur (10) befindet und einen zweiten Kanal (28), welcher sich auf der entgegengesetzten Wand (14) befindet, und durch eine Öffnung, die entsprechend den Kanälen angeordnet ist, insbesondere des ersten Kanals (24) einer Basisstruktur (10B) und des zweiten Kanals (28) einer anderen Basisstruktur (10C), für den gegenseitigen Eingriff angepaßt.

22. System näch den Ansprüchen 2 und 18,
**dadurch gekennzeichnet, daß** die vertikale Verlängerbarkeit der Box durch Entfernen mindestens einer Wand (13, 15) von jeder Basisstruktur zweier Basisstrukturen (10) und durch Koppeln einiger der Haken (18, 20) und der Sitze (19, 21), welche integral mit den verbleibenden Teilen der zwei Basisstrukturen (10), die verbunden werden sollen, gebildet ist, erhalten wird.

23. System nach den Ansprüche 3 und 19,
**dadurch gekennzeichnet, daß** die horizontale Verlängerbarkeit der Box durch Verbinden der ersten und zweiten Kanäle (24-26, 28-29) der beiden verschiedenen, zusammenzufügenden Basisstrukturen (10) erhalten wird.

24. System nach einem der vorstehenden Ansprüche,
**dadurch gekennzeichnet, daß** die Basisstruktur (10) durch ein einziges Teil gebildet wird, insbesondere aus Plastik, welches durch einen Formvorgang erhalten wurde.

25. System nach Anspruch 6,
**dadurch gekennzeichnet, daß** das untere Endstück (40) ein Schwenkelement (50) enthält, welches es erlaubt, die Schmuckplatte (45) oder die Vielzahl von Schmuckplatten mit den entsprechenden winkeligen Elementen (38, 39) bezüglich der Box (10) zu kippen.

26. Modulare Box für eine externe Rufeinheit einer Audio- und/oder Video-gegensprechanlage des Typs, welcher für die Aufnahme der elektrischen Komponenten (34, 35, 44) der Gegensprechanlage vorgesehen ist, wobei eine Abdeckung (33, 45, 47) dazu bestimmt ist, auf der Box befestigt zu werden,
**dadurch gekennzeichnet, daß** die Box beginnend mit einer oder mehreren modularen Basisstrukturen (10), welche untereinander alle gleich sind, realisiert wird, wobei Eingriffsmittel (18-29) vorgesehen sind, welche mit der Basisstruktur (10) eine Einheit bilden, um möglicherweise mit einer weiteren Basisstruktur (10) gekoppelt zu werden, wobei abhängig von den Abmessungen der zu erhaltenden Box dieselbe durch eine der Basisstrukturen (10) oder eine Vielzahl der Basisstrukturen (10), welche miteinander gekoppelt sind, erhalten wird,
**dadurch gekennzeichnet, daß** zur Erreichung einer Verlängerbarkeit der Box zum indest eine Wand (13, 15) jeder der beiden zu verbindenden Basisstrukturen (10) entfernbar ausgestaltet ist.

## Revendications

1. Système pour l'assemblage d'une unité d'appel externe d'un interphone audio et, ou bien, vidéo pour immeuble, ladite unité d'appel externe comprenant :
un boîtier,
un module d'interphone (34, 44) destiné à être logé à l'intérieur dudit boîtier (10),
au moins un couvercle (33, 45, 47) destiné audit boîtier,
au moins un bouton d'appel (35),
où ledit boîtier destiné à ladite unité externe est réalisé à partir d'une ou plusieurs structures de base modulaires (10) qui sont toutes égales entre elles, où des moyens de venue en prise (18-29) sont prévus, qui sont solidaires avec ladite structure de base (10), en vue de son couplage éventuel avec une autre structure de base (10), afin d'obtenir une possibilité d'augmentation de la taille dudit boîtier, et où, quelles que soient les dimensions de l'unité d'appel externe à assembler, le boîtier voulu est obtenu à partir d'une ou plusieurs desdites structures de base (10) couplées ensemble,
**caractérisé en ce que**, pour que l'on puisse obtenir une possibilité d'augmentation de taille du type boîtier, au moins une paroi (13, 15) de chacune de deux structures de base (10) à coupler ensemble est amovible.

2. Système selon la revendication 1, **caractérisé en ce que** la taille dudit boîtier peut être augmentée verticalement, par couplage de deux structures de base (10) l'une au-dessus de l'autre.

3. Système selon au moins l'une des revendications précédentes, **caractérisé en ce que** la taille dudit boîtier peut être augmentée horizontalement, par couplage, côte à côte, de deux structures de base (10).

4. Système selon la revendication 1, **caractérisé en ce que** l'on obtient ledit couvercle au moyen d'une ou plusieurs plaques de couvercle (33, 45, 47), les dimensions d'une plaque de couvercle (33, 45, 47) correspondant sensiblement à l'aire qui est définie par quatre parois (12-15) de ladite structure de base (10).

5. Système selon la revendication 4, **caractérisé en ce que** ladite plaque de couvercle (33, 45, 47) possède des bords latéraux conformés (36, 37) qui sont insérés à l'intérieur d'éléments angulaires (38, 39) ayant des profils complexes.

6. Système selon la revendication précédente, **caractérisé en ce qu'**une partie tête supérieure (41) et une partie terminale inférieure (40) sont fixées aux extrémités desdits éléments angulaires (38, 39), lesquelles sont elles-même fixées à des moyens de support (16) qui sont solidaires de ladite structure de base (10).

7. Système selon les revendications 2 et 5, **caractérisé en ce que**, dans le cas d'une augmentation verticale de la taille dudit boîtier, plusieurs dites plaques de couvercle (33, 45, 47) sont assemblées l'une au-dessus de l'autre au moyen desdits éléments angulaires (38, 39), dont la longueur correspond sensiblement à la dimension verticale du boîtier que l'on obtient par le couplage vertical de plusieurs desdites structures de base (10).

8. Système selon la revendication 5, **caractérisé en ce qu'**un élément profilé (48) est prévu, possédant en particulier une section en T double, qui peut être insérée à l'intérieur d'une partie desdits éléments angulaires (38, 39).

9. Système selon les revendications 3 et 8, **caractérisé en ce que**, dans le cas d'une augmentation horizontale de la taille dudit boîtier, ledit élément profilé (48) est utilisé pour coupler deux éléments angulaires (38, 39) côte à côte, en vue de la fixation mutuelle de deux plaques de couvercle (45, 47) de deux structures de base (10) disposées flanc à flanc.

10. Système selon l'une ou plusieurs des revendications précédentes, **caractérisé en ce que** des plaques de couvercle différentes (33, 45, 47) sont prévues pour porter :
un module d'interphone uniquement audio (34), ou
un module d'interphone audio/vidéo (44), ou
un ou plusieurs boutons d'appel (35).

11. Système selon au moins l'une des revendications précédentes, **caractérisé en ce que** ledit bouton d'appel (35) est associé à plusieurs contacts électriques, qui peuvent être activés simultanément ou séparément.

12. Système selon au moins l'une des revendications précédentes, **caractérisé en ce que** :
ou bien un module d'interphone uniquement audio (34), comprenant au moins un haut-parleur, un microphone et un circuit électrique,
ou bien un module d'interphone audio/vidéo (44), comprenant au moins une caméra de télévision (60), un haut-parleur (71), un microphone (70) et un circuit électrique (61-63, 65-68)
est destiné à être logé à l'intérieur de ladite structure de base (10), de façon qu'un module d'interphone uniquement audio (34) puisse être remplacé par un module d'interphone audio/vidéo (44) sans qu'il soit besoin de devoir changer ou modifier ledit boîtier (10).

13. Système selon la revendication 10 ou 12, **caractérisé en ce que** ledit module d'interphone audio/vidéo (44) comprend :
une caméra de télévision directionnelle (60) ;
un moyen (64) servant à éclairer le sujet qui est en train d'être filmé par ladite caméra de télévision (60), en particulier des diodes d'émission de lumière infrarouge,
un haut-parleur (71),
un microphone (70) de petites dimensions,
au moins un bouton d'appel (35),
des circuits imprimés (61, 62, 65, 66, 67, 68) qui portent ledit circuit électrique.

14. Système selon la revendication précédente, **caractérisé en ce que** ledit circuit électrique est monté sur une pluralité de cartes de circuit imprimé, dont au moins une partie possède des liaisons dimensionnelles.

15. Système selon au moins l'une des revendications précédentes, **caractérisé en ce que** ledit module d'interphone audio/vidéo (44) comprend un circuit de compensation, qui permet que des signaux de fréquence vidéo soient transmis via des câbles à plusieurs fils normaux, de sorte qu'on puisse remplacer un module d'interphone uniquement audio (34), à l'intérieur de l'une desdites structures de base, par un module d'interphone audio/vidéo (44) sans qu'il soit nécessaire de changer les connexions électriques qui connectent l'unité externe aux unités de surveillance internes voulues.

16. Système selon la revendication 1, **caractérisé en ce que** des moyens (17) sont prévus pour faciliter l'enlèvement de ladite paroi (13, 15).

17. Système selon la revendication précédente, **caractérisé en ce que** lesdits moyens (17) servant à faciliter l'enlèvement sont constitués par des fentes (17) ou des réductions d'épaisseur des parois (13, 15) disposées suivant la direction verticale et, ou bien, la direction horizontale.

18. Système selon la revendication 1, **caractérisé en ce que** lesdits moyens de venue en prise (18-29) comprennent des crochets (18, 20, 27, 29) et des sièges (19, 21, 23, 26) solidaires des parois (12-15) et, ou bien, du fond (11) de ladite structure de base (10).

19. Système selon la revendication 1, **caractérisé en ce que** ladite structure de base (10) comprend des moyens de passage (24, 26, 28-29) qui sont en mesure de réaliser le couplage mutuel de deux desdites structures de base (10), lesdits moyens de passage (24, 26, 28-29) constituant en particulier aussi une ouverture pour les tubes par lesquels les câbles de connexion électriques atteignent ledit boîtier.

20. Système selon la revendication précédente, **caractérisé en ce que** lesdits moyens de passage (24-26, 28-29) comprennent au moins une ouverture (25) et un conduit (24, 28) réalisé sur au moins une des parois (12-15) de ladite structure de base (10), se prolongeant à l'extérieur de cette dernière.

21. Système selon la revendication précédente, **caractérisé en ce que** lesdits moyens de passage (24-26, 28-29) sont constitués par un premier conduit (24) situé sur une paroi (12) de ladite structure de base (10) et un deuxième conduit (28) situé sur la paroi opposée (14) et par une ouverture placée en correspondance avec lesdits conduits, en particulier le premier conduit (24) d'une structure de base (10B) et le deuxième conduit (28) d'une autre structure de base (10C) qui sont susceptibles de venir mutuellement en prise.

22. Système selon les revendications 2 et 16-18, **caractérisé en ce que** l'on obtient la possibilité d'agrandir verticalement la dimension dudit boîtier en retirant au moins une paroi (13, 15) de chacune de deux structures de base (10) et en couplant certains des crochets (18, 20) et des sièges (19, 21) qui sont solidaires avec des parties restantes des deux structures de base (1) qui doivent être unifiées.

23. Système selon les revendications 3 et 19, **caractérisé en ce que** l'on obtient la possibilité d'augmenter horizontalement la dimension dudit boîtier en mettant en prise lesdits premier et deuxième conduits (24-26, 28, 29) des deux structures de base différentes (10) qui doivent être unifiées.

24. Système selon au moins l'une des revendications précédentes, **caractérisé en ce que** ladite structure de base (10) est constituée d'une pièce unique, en particulier d'une matière plastique, qu'on obtient par une opération de moulage.

25. Système selon la revendication 6, **caractérisé en ce que** ladite partie terminale inférieure comprend un élément charnière (50) qui permet d'incliner ladite plaque (45) ou plusieurs plaques, avec les éléments angulaires voulus (38, 39), par rapport au boîtier (10).

26. Boîtier modulaire destiné à une unité d'appel externe d'un interphone audio et, ou bien, vidéo, du type prévu pour loger des composants électriques (34, 35, 44) dudit interphone, où un couvercle (33, 45, 47) est destiné à être fixé sur ledit boîtier, où ledit boîtier est réalisé à partir d'une ou plusieurs structures de base modulaires (10) qui sont toutes égales entre elles, et où des moyens de venue en prise (18-29) sont prévus, qui sont solidaires avec ladite structure de base (10), pour effectuer un éventuel couplage de celle-ci avec une autre structure de base (10), si bien que, en fonction des dimensions à obtenir pour le boîtier, on obtient celles-ci par l'intermédiaire de l'une desdites structures de base (10), ou de plusieurs desdites structures de base (10) couplées les unes aux autres, **caractérisé en ce que**, pour obtenir des possibilités d'augmentation dudit boîtier, au moins une paroi (13, 15) de chacune de deux structures de base (10) à coupler est amovible.
